# DEMANDE DE BREVET EUROPEEN

(11) **EP 2 189 512 A1**
(43) Date de publication de la demande: **26.05.2010**
(21) Numéro de dépôt: 08169763.3
(22) Date de dépôt: 24.11.2008
(51) Int. Cl.: C10B 53/02, C10L 5/44

(54) **Procédé de torrefaction de la biomasse et controle de celui-ci**

(71) Demandeur: SA COCKERILL MAINTENANCE ET INGENIERIE, 4100 Seraing (BE)
(72) Inventeur: Leboutte, Didier, B-4000, Liege (BE)
(74) Mandataire: pronovem

(57) **Abrégé**

Procédé de traitement thermique d'une charge de biomasse, de préférence lignocellulosique, à 300°C maximum, sous atmosphère contrôlée en défaut d'oxygène, dans lequel la biomasse subit dans un réacteur un brassage et, grâce à un flux de gaz chauds, une première étape de séchage poussé suivie d'une seconde étape de torréfaction, ledit réacteur étant pourvu de moyens de convoyage et de contrôle de la vitesse v d'avancement de la biomasse au travers du réacteur, de moyens de chauffage par flux de gaz, de moyens de prélèvement des vapeurs et gaz, de moyens de mesure de la pression dans le réacteur et de la pression des vapeurs et gaz prélevés, de moyens de mesure et contrôle de la température dans le réacteur, **caractérisé en ce que** l'on ajuste la vitesse d'avancement v et la température T des gaz de chauffe, dite température de consigne, de manière à assurer :
- une séparation dans le temps des émissions de vapeurs provenant du séchage des gaz et des gaz de pyrolyse provenant de la torréfaction ;
- une torréfaction homogène et constante à la fin du procédé ;
- une torréfaction se déroulant dans un intervalle de temps précis et reproductible et à un endroit précis du réacteur, sur le chemin d'avancement de la charge.

## Description

### Objet de l'invention

La présente invention se rapporte à un procédé amélioré pour la torréfaction de biomasse lignocellulosique, principalement sous forme de bois.

Un premier domaine d'application de la torréfaction est une étape de préparation de la biomasse entre le séchage et l'étape de production des biocarburants de 2ème génération par voie thermochimique, en particulier la conversion de biomasse en carburant liquide par gazéification et synthèse Fischer-Tropsch (BTL pour *Biomass to Liquid*).

Un deuxième domaine d'application de la torréfaction de biomasse est la production d'un co-combustible pour des centrales au fuel ou au charbon.

Un troisième domaine d'application est la production de bois décoratif par agglomération.

### Arrière-plan technologique et état de la technique

Dans le domaine de l'énergie, la notion de biomasse regroupe l'ensemble des matières organiques pouvant devenir des sources d'énergie. Ces matières organiques qui proviennent des plantes sont une forme de stockage de l'énergie solaire captée par les plantes. Elles peuvent être utilisées soit directement (bois énergie), soit après une méthanisation de la matière organique (biogaz), soit après de nouvelles transformations chimiques (biocarburant). Cette troisième voie fait l'objet de la présente invention.

Le bilan quantitatif CO₂ de l'utilisation de biomasse comme source d'énergie est nul à condition que toute l'énergie qu'il a fallu dépenser pour extraire du combustible de la biomasse soit elle aussi d'origine biomasse et à condition que le procédé d'extraction ne libère pas d'autres gaz à effet de serre, comme le méthane, qui a un pouvoir réchauffant environ 21 fois plus important que CO₂. L'énergie tirée de la biomasse peut ainsi dans la plupart des cas être considérée comme une énergie renouvelable.

Dans ce contexte, on sait que les gazéifieurs acceptent mal l'humidité et les variations de paramètres de la biomasse. De plus, les coûts de broyage sont très importants. Les recherches menées sur l'optimisation de la préparation de la biomasse ont démontré que le bois torréfié présentait des caractéristiques très avantageuses à cet égard : facilité de broyage, caractère hydrophobe, variabilité moindre de composition que le bois naturel en fonction des différentes essences.

On entend par torréfaction un traitement thermique de la biomasse à 300°C maximum, généralement en l'absence d'oxygène et parfois sous balayage d'azote, qui permet de concentrer l'énergie dans le matériau et de rendre ce dernier plus cassant et donc plus facilement broyable pour une utilisation en poudre. La torréfaction de biomasse est un procédé tout à fait analogue à la torréfaction de café. Cependant, dans le cas de la torréfaction du bois, la problématique de la fluidité de l'entraînement de la matière dans le procédé est beaucoup plus aiguë, du fait que les grains de café se présentent sous une forme idéale de bille. A l'heure actuelle, il n'existe pas d'installation de torréfaction de type industriel.

Dans une première phase, un prétraitement thermique sous forme d'un séchage poussé est effectué pour ajuster l'humidité de la biomasse. Ce prétraitement libère l'eau, en ce compris l'eau liée, qui est à l'origine du retrait du bois. Le bois séché comporte de 10 à 15% d'humidité en surface et environ 20% à coeur.

Dans une seconde phase, on fragilise la biomasse par un traitement thermique doux, qui est la torréfaction proprement dite, en l'absence d'air, et qui sera suivie d'un broyage permettant d'ajuster la granulométrie à la valeur désirée avant l'entrée dans un four de pyrolyse par exemple. Dans cette étape, on « dégrade » les lignines, les celluloses et les hémicelluloses du bois. Les réseaux polymères de lignine sont en fait plutôt réarrangés que dégradés. Ce phénomène qui apparaît à partir de 160°C confère au bois un caractère hydrophobe. Le bois torréfié a ainsi son équilibre hygroscopique aux alentours de 3%. Ce procédé est connu sous le nom de procédé Pechiney, cette société ayant conçu une installation-pilote à la fin des années 80.

La plupart des études attribuent l'exothermicité de la réaction de torréfaction à la présence de réactions secondaires. On assiste à l'inversion des températures à coeur et en surface avec dépassement de la température de consigne. Ces réactions exothermiques sont influencées par différents facteurs tels que l'épaisseur ou la température de palier. Pour un bois humide, l'exothermicité des réactions commencerait à des températures plus basses, l'eau occasionnant un meilleur transport de chaleur vers l'intérieur, jouant ainsi le rôle de catalyseur en activant les réactions d'hydrolyse. Une forte épaisseur se traduit par un emballement thermique conduisant rapidement à des échauffements à coeur si le traitement thermique n'est pas maîtrisé à temps.

On connaît des procédés de torréfaction de la biomasse en vue d'en faire un combustible amélioré, qui font appel à des technologies de type four rotatif, four à étage, four tunnel saturé en liquide ou en vapeur, four à vis ou lit fluidisé.

Ces technologies rencontrent cependant plusieurs problèmes :
- un traitement des fumées coûteux et difficile du fait de la haute teneur en eau des vapeurs et du faible pouvoir calorifique des fumées ;
- une faible productivité des installations impliquant un investissement important en capital ;
- une difficulté de garantir une qualité constante du produit fini. Il y a une mauvaise corrélation entre la température des différentes parties d'un four et la température effective de la matière traitée. De ce fait, il est difficile dans l'état actuel de contrôler le temps effectif de torréfaction.

Il est connu depuis longtemps que, lors de la première phase de la torréfaction, appelée communément séchage poussé, les gaz effluents sont principalement aqueux et que dans la seconde phase, appelée torréfaction, ces gaz effluents sont de compositions diverses mais connues et surtout sont combustibles.

Récemment, des solutions on vu le jour, utilisant deux parties distinctes de l'installation, respectivement pour le séchage poussé et pour la torréfaction, permettant de dissocier facilement les parties hautement combustibles. Ainsi le document WO 2007/078199 A1 divulgue un procédé de traitement de biomasse contenant un certain degré d'humidité résiduelle (procédé Bergman, ECN, Pays-Bas). La matière est chauffée à une température de torréfaction dans une atmosphère pauvre en oxygène dans un réacteur de torréfaction, ce qui permet de la convertir en matière torréfiée. La matière humide est d'abord séchée complètement dans une chambre de séchage par évaporation de l'humidité résiduelle. Le réacteur de torréfaction comprend une chambre dans laquelle la torréfaction de cette matière sèche est essentiellement réalisée. La matière est transportée à travers le réacteur de torréfaction. Le séchage de la matière est réalisé dans la chambre de séchage en introduisant dans celle-ci un gaz chaud qui s'écoule à travers ladite chambre en co-courant avec le transport de la matière. La torréfaction est effectuée en introduisant dans la chambre de torréfaction un gaz chaud qui s'écoule à travers ladite chambre à contre-courant du transport de la matière à torréfier.

Le réacteur de torréfaction est pourvu d'un dispositif destiné à alimenter le réacteur et à acheminer la biomasse vers le haut, par exemple un convoyeur à vis. Dans ce réacteur, les gaz de séchage refroidis, les gaz et vapeurs formés lors de l'évaporation de l'humidité résiduelle contenue dans la biomasse, les gaz de torréfaction et les gaz combustibles générés par torréfaction de la biomasse sont extraits à différents niveaux.

La bonne pratique consiste à installer des échangeurs de chaleur pour récupérer les calories perdues partout où cela est possible. Il est donc classique de voir proposer des échangeurs vapeur/air pour préchauffer les gaz servant à sécher la biomasse. Le positionnement et le dimensionnement des échangeurs de chaleur font partie de l'état de l'art.

L'inconvénient de ce type de réacteur est que, suite aux différentes granulométries du bois, la chaleur passe par des courts-circuits. Il y a donc accumulation de chaleur à certains endroits d'une part et existence de zones froides d'autre part. On n'a donc aucune garantie, à cause de ces ponts thermiques, d'avoir une séparation maîtrisée d'une part des vapeurs humides de séchage et d'autre part des gaz combustibles de pyrolyse, ni aucune garantie que la torréfaction est complète.

De plus, en dépit d'avantages tels qu'une bonne maîtrise des conditions opératoires, un fonctionnement continu et la facilité de mise en oeuvre, les fours à vis présentent les désavantages de chauffer uniquement la paroi du réacteur et de procurer un brassage insuffisant de la matière.

Dans les fours tournants, le procédé est mal maîtrisé et le dimensionnement à l'échelle industrielle est coûteux.

Les fours à soles multiples actuels constituent une technologie mature et présentent un « upsizing » maîtrisé. Cependant, il reste des désavantages tels qu'une instrumentation insuffisante (pas de mesure de la température du lit), un brassage et une étanchéité à améliorer et un refroidissement insuffisant du produit sortant.

Enfin, les fours à lit fluidisé exigent un broyage préalable de la biomasse avant torréfaction.

Dans la plupart des fours de torréfaction proposés, la matière est transportée par paquets, ce qui induit une perte d'homogénéité du produit fini : les particules extérieures étant soumises plus longtemps à l'action de la chaleur que celles se trouvant à l'intérieur.

Les fours tournants et à soles multiples présentent cependant l'avantage de brasser continuellement le produit.

### Buts de l'invention

La présente invention vise à fournir une solution qui permette de s'affranchir des inconvénients de l'état de la technique.

En particulier, l'invention vise à fournir un procédé qui permette la production d'un bois torréfié de qualité constante et contrôlée.

L'invention a encore pour but de fournir un procédé qui accepte la contrainte de l'introduction d'un bois (ou généralement la biomasse) à l'équilibre hygroscopique (9-13%), qui permet de rendre le bois anhydre sans déclencher des réactions exothermiques, de le maintenir au palier de torréfaction pendant un temps déterminé et de refroidir la matière torréfiée pour éviter son inflammation à l'air libre.

L'invention a encore pour but de maîtriser les phénomènes d'emballement thermique qui peuvent caractériser les réactions liées à la torréfaction ou d'inflammation du produit fini à la sortie du four.

L'invention a encore pour but de s'inscrire dans une chaîne de préparation de la biomasse par torréfaction suivie d'un broyage fin, permettant par exemple l'injection du produit sous pression dans un gazéifieur ainsi qu'une densification éventuelle afin de minimiser les coûts de transport.

### Principaux éléments caractéristiques de l'invention

La présente invention se rapporte à un procédé de traitement thermique d'une charge de biomasse, de préférence lignocellulosique, à 300°C maximum, sous atmosphère contrôlée en défaut d'oxygène, dans lequel la biomasse subit dans un réacteur un brassage et, grâce à un flux de gaz chauds, une première étape de séchage poussé suivie d'une seconde étape, appelée torréfaction, où la biomasse subit une ou plusieurs réactions de transformation exothermiques, ledit réacteur étant pourvu de moyens de convoyage et de contrôle de la vitesse v d'avancement de la biomasse au travers du réacteur, de moyens de chauffage par flux de gaz, de moyens de prélèvement des vapeurs et gaz, de moyens de mesure de la pression dans le réacteur et de la pression des vapeurs et gaz prélevés, de moyens de mesure et contrôle de la température dans le réacteur, caractérisé en ce que l'on ajuste la vitesse d'avancement v et la température T des gaz de chauffe, dite température de consigne, de manière à assurer :
- une séparation dans le temps des émissions de vapeurs provenant du séchage des gaz et des gaz de pyrolyse provenant de la torréfaction ;
- une torréfaction homogène et constante à la fin du procédé. La torréfaction est homogène si la particule torréfiée a des caractéristiques physicochimiques similaires à celles des particules voisines. La torréfaction est constante si les propriétés physicochimiques des particules torréfiées à un moment donné t₀ sont similaires à celles torréfiées à un autre moment t₁ ;
- une torréfaction se déroulant dans un intervalle de temps précis et reproductible et à un endroit précis du réacteur, sur le chemin d'avancement de la charge.

Avantageusement, dans le procédé selon l'invention, ledit réacteur est un four tournant, un four à vis ou un four à étages à soles multiples.

Selon une forme d'exécution particulière du procédé de l'invention :
- ledit réacteur est un four à soles multiples comportant une série de N₀ soles ou plaques de cuisson circulaires disposées les unes au-dessus des autres dans une enveloppe d'acier tapissée d'isolant , un arbre rotatif vertical de vitesse de rotation ω (oméga), disposé selon l'axe du four portant des bras munis de râbles pour brasser la charge et la déplacer par des orifices ménagés au travers de chaque sole, la biomasse étant chargée au niveau de la sole supérieure et se déplaçant vers le bas, pour former un lit râblé sur chaque sole et étant chauffée par un courant de gaz chauds pour porter celle-ci à une température apte à provoquer le séchage poussé de celle-ci et sa torréfaction, et en ce que
- on règle la vitesse de rotation ω dudit arbre et la température T des gaz de chauffe au cours du temps pour réaliser une torréfaction complète de la biomasse au niveau de la sole N (1 < N < N₀), ladite torréfaction complète étant caractérisée par un pic de pression des gaz de torréfaction pratiquement entièrement confiné au niveau de la sole N, le séchage poussé de la biomasse étant réalisé au niveau d'une ou plusieurs soles précédentes N' (1 < N' < N), la localisation des gaz et vapeurs de séchage poussé étant déterminée par la position du pic de pression correspondant dans le procédé.

Selon une forme d'exécution encore plus particulière du procédé selon l'invention, le four comporte 6 soles I-VI, le séchage complet est entièrement effectué dans les soles I à III et la torréfaction est effectuée en sole IV.

Selon l'invention, avantageusement, les vapeurs et gaz de séchage poussé sont extraits au niveau de la sole N-1, les gaz de pyrolyse de torréfaction sont extraits au niveau des soles N et suivantes pour un usage différé comme combustible et/ou les gaz de pyrolyse de torréfaction sont oxydés partiellement dans la sole N du four.

Toujours selon l'invention, la température des gaz de chauffe T et la vitesse de rotation de l'arbre du four ω sont régulées sur :
- des analyses de composition des gaz prélevés aux différentes soles ;
- des mesures pyrométriques aux différentes soles.

De préférence, l'alimentation en biomasse du four à soles multiples est adaptée en continu de manière à maintenir l'épaisseur du lit râblé constante.

De préférence encore, on utilise des brumisateurs, installés en soles N et suivantes pour refroidir la charge de biomasse traitée thermiquement au moyen d'eau brumisée ou de vapeur d'eau à basse température et pour prévenir son inflammation lorsqu'elle débouche à l'air libre à la sortie du four.

Les brumisateurs sont avantageusement réglés pour obtenir une teneur de 3-4% d'eau dans la charge, ce qui correspond à l'équilibre hygroscopique du bois torréfié.

Toujours selon l'invention, l'extraction de biomasse traitée du four est avantageusement effectuée au moyen d'une vis refroidie de longueur suffisante pour amener la température de la biomasse traitée thermiquement en dessous de son point d'allumage.

De préférence encore, l'on neutralise, récupère l'énergie des ou valorise les gaz extraits du four.

### Brève description des figures

La figure 1 représente schématiquement une installation de four à soles multiples adaptée en fonction des besoins de la présente invention.

Les figures 2 et 3 représentent schématiquement des simulations de diagrammes de température et de pression au cours du temps dans le cas de deux formes d'exécution particulières du procédé de torréfaction selon la présente invention.

### Description de formes d'exécution préférées de l'invention

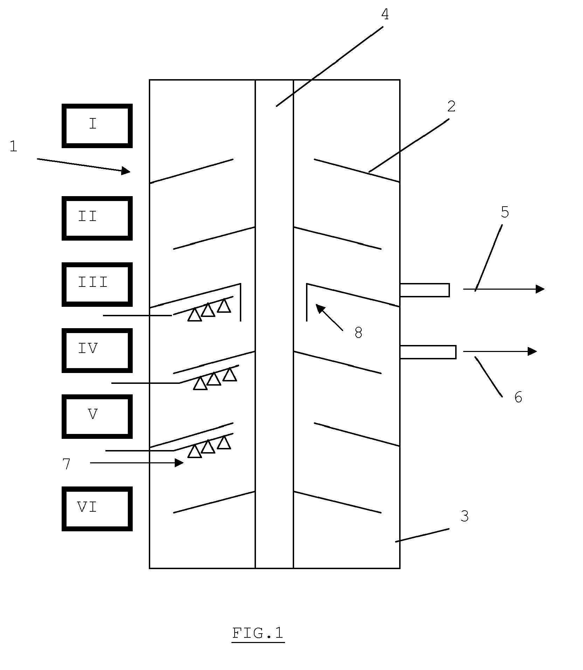

La solution préconisée selon la présente invention consiste en un four à soles multiples, par exemple de 6 étages, comme représenté sur la figure 1, ainsi qu'un procédé mettant ce four en oeuvre.

Un four à soles multiples 1 peut par exemple se présenter sous la forme d'une série de soles ou plaques de cuisson 2 circulaires, notées I à VI, en commençant par le haut, disposées les unes au-dessus des autres dans une enveloppe d'acier 3 tapissée de réfractaire. Un arbre rotatif vertical 4 disposé selon l'axe du four porte des bras munis de râbles (non représentés), c'est-à-dire d'outils en forme de rateau, qui brassent la charge et la déplacent à travers chaque sole selon un chemin en spirale La biomasse est chargée au niveau de la sole supérieure I et râblée pour passer à travers celle-ci par des orifices débouchant sur la sole immédiatement inférieure II, etc. (non représenté). Elle passe donc de cette manière sur et à travers chaque sole 2 vers le bas de l'installation où le produit est déchargé. Des gaz chauds portent celle-ci à la température désirée et provoquent la ou les réactions souhaitées, en particulier le séchage poussé et la torréfaction. La chaleur est produite par la combustion soit de constituants de la charge elle-même, soit de carburant auxiliaire. L'installation fonctionne sous atmosphère contrôlée et comporte des moyens de contrôle de la température et du temps de séjour de la charge dans le four.

Selon l'invention, le nombre d'étages et leur dimension peuvent varier en fonction de la production envisagée pour l'unité de torréfaction.

Selon une forme d'exécution préférée, les vapeurs du séchage poussé 5 sont soutirées en sole III et les gaz de torréfaction résiduels 6 sont soutirés en sole IV, V ou VI.

Avantageusement, les bras de râblage ont une forme optimisée, semblable à un fer de charrue (non représenté), pour retourner continuellement le lit râblé.

De préférence, l'alimentation en biomasse est adaptée en continu de manière à maintenir l'épaisseur du lit râblé constante à l'intérieur du four.

Selon une caractéristique essentielle du procédé de l'invention, la température T de consigne des différentes soles et la vitesse de rotation ω de la sole (et donc le temps de séjour t) sont fixées ou régulées de manière à optimiser la séparation des vapeurs et des gaz de torréfaction.

Plus particulièrement, la température T et la vitesse ω précitées sont régulées à partir des mesures suivantes :
- des prélèvements de gaz sont réalisés aux différentes soles pour analyse de leur composition, en vue de maintenir le pic de production des gaz de torréfaction au niveau de la sole 4 dans l'exemple ;
- des mesures pyrométriques sont réalisées à chaque étage, en vue de déterminer et contrôler le moment où la température des particules dépasse la température de consigne, ce qui est caractéristique de la réaction exothermique liée à la torréfaction.

Des simulations ont été effectuées par la Demanderesse, en collaboration avec le LERMAB (Laboratoire d'Etude et de Recherche sur le Matériau Bois), dans le cadre d'un four pilote de CMI-Nesa, en utilisant le modèle de Rousset et al. (CIRAD) pour la torréfaction et de Younsi et al. pour le séchage à haute température.

Les simulations ont été réalisées sur base de l'hypothèse d'un lit râblé de 5 cm d'épaisseur. Les résultats ont été présentés sous la forme de courbes de température et de pression relative en fonction du temps.

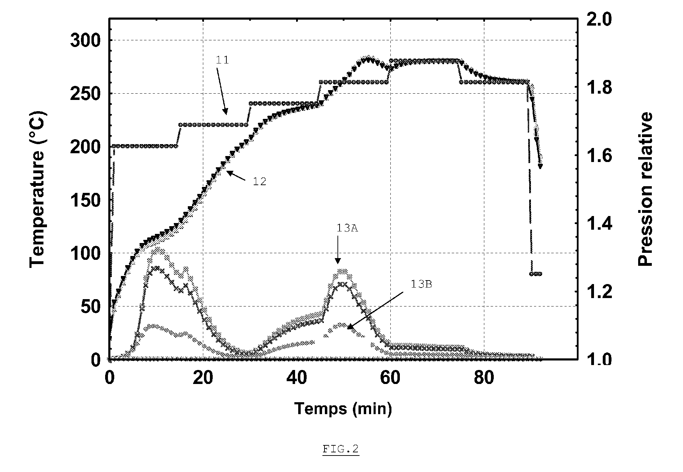

La figure 2 montre la courbe 11 des paliers de consigne de température des gaz de chauffe et différentes courbes 12 de température de la particule de bois (en peau, à coeur, etc.) en fonction du temps. Elle montre également les courbes de pression relatives à différents niveaux de la particule de bois (courbe supérieure 13A : à coeur, courbe inférieure 13B : à proximité de la peau de la particule). Le premier pic de pression dans le temps correspond au séchage et au dégagement de vapeur essentiellement. Le second pic de pression dans le temps correspond aux réactions exothermiques de la torréfaction et des gaz qui en résultent. La torréfaction se caractérise par l'apparition d'un pic de température dans le bois, qui dépasse la température de consigne.

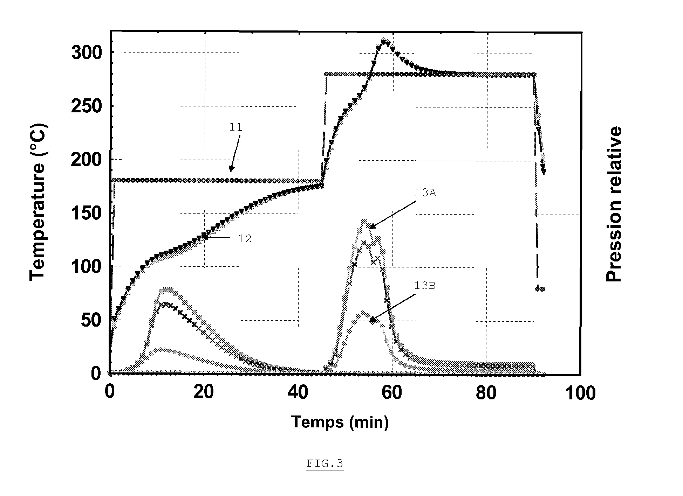

Lorsque le processus est lent (environ 15 min/sole), les simulations montrent que le procédé est tolérant vis-à-vis de l'humidité. Si on fait varier le taux d'humidité dans le bois de 10 à 20% par exemple, on voit que le pic de séchage se modifie, mais le pic exothermique reste au même endroit dans le temps et sa forme reste stable (non représenté). Par contre si l'on augmente l'épaisseur des particules de bois (de 5 à 10 mm par exemple), on voit que la température des particules décroche par rapport à la température de consigne et que les pressions relatives augmentent (non représenté). En cas de modification des consignes, on modifie essentiellement la forme des courbes de pression relative (voir figure 3).

Si on accélère le procédé par des consignes de température très élevées dès le départ, la vaporisation s'accélère et la température de torréfaction est en permanence au-dessus de la température de consigne des gaz. On suppose ici une absorption de la chaleur par le lit un peu meilleure que dans les hypothèses précédentes.

Selon un autre aspect de l'invention, des brumisateurs 7 installés en soles IV, V et VI permettent d'agir rapidement sur toute amorce d'emballement. Avantageusement on utilisera de l'eau brumisée ou de la vapeur à très basse température pour refroidir la charge et prévenir son inflammation à l'air libre, de préférence de manière à obtenir une teneur de 3-4% H₂O dans la charge, correspondant à l'équilibre hygroscopique du bois torréfié.

L'extraction du produit fini peut se faire de différentes manières, mais classiquement au moyen d'une vis refroidie de longueur suffisante pour amener la température du bois torréfié en dessous de son point d'allumage.

Le procédé de l'invention est compatible avec un chauffage direct, qui entraîne une oxydation partielle des gaz de torréfaction en sole IV. Cependant, si un usage différé des gaz est décidé, il est loisible de remplacer le chauffage direct par un chauffage indirect dans les soles IV, V et VI. Les gaz soutirés peuvent alors être réutilisés au travers d'un brûleur à un quelconque endroit du procédé.

En cas d'oxydation directe des gaz dans le four, la quantité de gaz utilisé pour soutenir la flamme peut être utilisée comme indicateur indirect de la qualité et de la quantité du gaz de torréfaction produit.

Les effluents, en dépit de leur acidité et de leur variabilité, pourront être neutralisés, leur énergie récupérée éventuellement ou bien pourront être valorisés.

Enfin, toujours selon l'invention, une trémie ou une goulotte 8 peut être installée pour limiter la chute et le dégagement de poussière en sole IV.

### Avantages de l'invention

Le système selon l'invention permet un contrôle en continu du procédé de torréfaction en garantissant un couple temps de résidence/température de traitement. Il permet une homogénéisation constante du lit râblé.

Contrairement à l'état de la technique, on utilise, selon la présente invention, les propriétés physicochimiques de la torréfaction pour contrôler en continu le procédé. Le procédé de l'invention permet de faire abstraction de l'empirisme connu dans les méthodes de l'état de la technique. Par exemple, il n'est plus nécessaire de procéder à une torréfaction en se servant d'abaques pour chaque essence de bois.

Le mode de régulation selon l'invention est applicable à toute installation de torréfaction (four à vis, four tournant, etc.), mais son application préférée est sur un four à étages à soles multiples.

### Références

- Rousset, P., Choix et validation expérimentale d'un modèle de pyrolyse pour le bois traité par haute température: de la microparticule au bois massif, Sciences forestières et du Bois 2004, ENGREF: Nancy, p. 180.
- Rousset, P., et al., Effect of extreme thermal treatment on lignins in spruce and beech wood, soumis en 2007.
- Rousset, P., Perré, P. et Girard, P., Modification of mass transfer properties in poplar wood (P.robusta) by a thermal treatment at high temperature, Holz als Roh- und Werkstoff, 2004, 62(2): p. 113-119.
- Younsi, R., et al., Transient Multiphase Model for the High-Temperature Thermal Treatment of Wood, A.I.ChE. Journal, 2006, 52(7): p. 2340-2349.

## Revendications

1. Procédé de traitement thermique d'une charge de biomasse, de préférence lignocellulosique, à 300°C maximum, sous atmosphère contrôlée en défaut d'oxygène, dans lequel la biomasse subit dans un réacteur un brassage et, grâce à un flux de gaz chauds, une première étape de séchage poussé suivie d'une seconde étape, appelée torréfaction, où la biomasse subit une ou plusieurs réactions de transformation exothermiques, ledit réacteur étant pourvu de moyens de convoyage et de contrôle de la vitesse v d'avancement de la biomasse au travers du réacteur, de moyens de chauffage par flux de gaz, de moyens de prélèvement des vapeurs et gaz, de moyens de mesure de la pression dans le réacteur et de la pression des vapeurs et gaz prélevés, de moyens de mesure et contrôle de la température dans le réacteur, **caractérisé en ce que** l'on ajuste la vitesse d'avancement v et la température T des gaz de chauffe, dite température de consigne, de manière à assurer :
- une séparation dans le temps des émissions de vapeurs provenant du séchage des gaz et des gaz de pyrolyse provenant de la torréfaction ;
- une torréfaction homogène et constante à la fin du procédé ;
- une torréfaction se déroulant dans un intervalle de temps précis et reproductible et à un endroit précis du réacteur, sur le chemin d'avancement de la charge.

2. Procédé selon la revendication 1, **caractérisé en ce que** ledit réacteur est un four tournant, un four à vis ou un four à étages à soles multiples.

3. Procédé selon la revendication 1 ou 2, **caractérisé en ce que :**
- ledit réacteur est un four à soles multiples (1) comportant une série de N₀ soles ou plaques de cuisson (2) circulaires disposées les unes au-dessus des autres dans une enveloppe d'acier (3) tapissée d'isolant , un arbre rotatif vertical (4) de vitesse de rotation ω (oméga), disposé selon l'axe du four portant des bras munis de râbles pour brasser la charge et la déplacer par des orifices ménagés au travers de chaque sole, la biomasse étant chargée au niveau de la sole supérieure et se déplaçant vers le bas, pour former un lit râblé sur chaque sole et étant chauffée par un courant de gaz chauds pour porter celle-ci à une température apte à provoquer le séchage poussé de celle-ci et sa torréfaction, et **en ce que**
- on règle la vitesse de rotation ω dudit arbre (4) et la température T des gaz de chauffe au cours du temps pour réaliser une torréfaction complète de la biomasse au niveau de la sole N (1 < N < N₀), ladite torréfaction complète étant **caractérisée par** un pic de pression des gaz de torréfaction pratiquement entièrement confiné au niveau de la sole N, le séchage poussé de la biomasse étant réalisé au niveau d'une ou plusieurs soles précédentes N' (1 < N' < N), la localisation des gaz et vapeurs de séchage poussé étant déterminée par la position du pic de pression correspondant dans le procédé.

4. Procédé selon la revendication 3, **caractérisé en ce que,** le four comportant 6 soles I-VI, le séchage complet est entièrement effectué dans les soles I à III et la torréfaction est effectuée en sole IV.

5. Procédé selon la revendication 3, **caractérisé en ce que** les vapeurs et gaz de séchage poussé (5) sont extraits au niveau de la sole N-1.

6. Procédé selon la revendication 3, **caractérisé en ce que** les gaz de pyrolyse de torréfaction (6) sont extraits au niveau des soles N et suivantes pour un usage différé comme combustible.

7. Procédé selon la revendication 3, **caractérisé en ce que** les gaz de pyrolyse de torréfaction sont oxydés partiellement dans la sole N du four.

8. Procédé selon la revendication 3, **caractérisé en ce que** la température des gaz de chauffe T et la vitesse de rotation de l'arbre du four ω sont régulées sur :
- des analyses de composition des gaz prélevés aux différentes soles ;
- des mesures pyrométriques aux différentes soles.

9. Procédé selon la revendication 3, **caractérisé en ce que** l'alimentation en biomasse du four à soles multiples est adaptée en continu de manière à maintenir l'épaisseur du lit râblé constante.

10. Procédé selon la revendication 3, **caractérisé en ce qu'**on utilise des brumisateurs (7), installés en soles N et suivantes pour refroidir la charge de biomasse traitée thermiquement au moyen d'eau brumisée ou de vapeur d'eau à basse température et pour prévenir son inflammation lorsqu'elle débouche à l'air libre à la sortie du four.

11. Procédé selon la revendication 10, **caractérisé en ce que** les brumisateurs (7) sont réglés pour obtenir une teneur de 3-4% d'eau dans la charge, ce qui correspond à l'équilibre hygroscopique du bois torréfié.

12. Procédé selon la revendication 3, **caractérisé en ce que** l'extraction de biomasse traitée du four est effectuée au moyen d'une vis refroidie de longueur suffisante pour amener la température de la biomasse traitée thermiquement en dessous de son point d'allumage.

13. Procédé selon l'une quelconque des revendications 5 ou 6, **caractérisé en ce que** l'on neutralise, récupère l'énergie des ou valorise les gaz (5, 6) extraits du four.
